# EUROPÄISCHE PATENTANMELDUNG

(11) **EP 2 581 169 A1**
(43) Veröffentlichungstag der Anmeldung: **17.04.2013**
(21) Anmeldenummer: 11185131.7
(22) Anmeldetag: 14.10.2011
(51) Int. Cl.: B24C 1/10, F16L 55/46, F41A 9/02, B24C 7/00

(54) **Dosiervorrichtung**

(71) Anmelder: bedeko GmbH, 72813 St. Johann-Upfingen (DE)
(72) Erfinder: Jenderek, Henry, 72813 St. Johann (DE)
(74) Vertreter: Ruckh, Rainer Gerhard

(57) **Zusammenfassung**

Die Erfindung betrifft eine Dosiervorrichtung (2) mit einer Vereinzelungseinheit (5), mittels derer einzelne Hartkörper (3) einem ein Fluid führendes Rohr (1) zuführbar sind. Die Vereinzelungseinheit (5) weist eine Transportscheibe (8) auf, durch deren Betätigung zu definierten Zeitpunkten eine Einzelzuführung von Hartkörpern (3) in das Rohr erfolgt. Dabei wird ein in das Rohr eingeführter Hartkörper (3) mittels des Fluids in dem Rohr transportiert.

## Beschreibung

Die Erfindung betrifft eine Dosiervorrichtung.

Derartige Dosiervorrichtungen können insbesondere als Transportvorrichtungen ausgebildet sein, mittels derer vereinzelt Transportkörper einem strömenden Fluid, das heißt einem Gas oder einer Flüssigkeit zugeführt werden.

Ein Beispiel hierfür ist eine Transportvorrichtung, bei welcher ein Transportbehälter oder ein Reinigungskörper, ein sogenannter Molch, einer Pipeline zugeführt wird, in der ein strömendes Fluid, beispielsweise Erdgas oder Erdöl geführt wird.

Ein Problem bei bekannten Transportvorrichtungen besteht darin, dass die Strömung des Fluids erheblich gestört oder sogar unterbrochen wird, wenn ein solcher Körper in die Pipeline eingespeist wird. Ein Problem besteht dabei insbesondere darin, dass bei der Einschleusung des Körpers in die Pipeline durch die dabei hervorgerufene Störung der Strömung eine unerwünschte Rückwirkung auf das strömende Fluid und das Leitungssystem der Pipeline auftritt, die einerseits die Einschleusung stört und andererseits zu hohen Belastungen imm Leitungssystem führen kann. Weiterhin besteht generell ein Problem darin, die Körper so in die Pipeline einzuschleusen, dass am Ort der Einschleusung keine undichten Stellen auftreten, über welche das Fluid unkontrolliert austreten kann.

Der Erfindung liegt die Aufgabe zugrunde eine robuste und konstruktiv einfache Dosiervorrichtung bereitzustellen, mittels derer Hartkörper möglichst rückwirkungsfrei einem Fluid zuführbar sind.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft eine Dosiervorrichtung mit einer Vereinzelungseinheit, mittels derer einzelne Hartkörper einem ein Fluid führendes Rohr zuführbar sind. Die Vereinzelungseinheit weist eine Transportscheibe auf, durch deren Betätigung zu definierten Zeitpunkten eine Einzelzuführung von Hartkörpern in das Rohr erfolgt. Dabei wird ein in das Rohr eingeführter Hartkörper mittels des Fluids in dem Rohr transportiert.

Ein wesentlicher Vorteil der erfindungsgemäßen Dosiervorrichtung besteht darin, dass mit dieser Hartkörper auch schnell strömenden Fluiden zugeführt werden können, ohne dass diese Strömung nennenswert gestört wird. Dadurch, dass die Hartkörper ohne eine Störung der Strömung in das Rohr eingespeist werden, treten auch keine unerwünschten Rückwirkungen auf die Komponenten der Dosiervorrichtung oder den Hartkörper selbst noch auf das Rohr und damit verbundene Komponenten auf.

Ein weiterer wesentlicher Vorteil besteht darin, dass dem Fluid die Hartkörper zu frei wählbaren, exakt vorgebbaren Zeitpunkten dem Rohr zugeführt werden. Je nach Applikation können gezielt auch mehrere Hartkörper mit einer wählbaren nach Bedarf sehr hohen Repetierrate dem Fluid zugeführt werden. Dabei wird eine sichere Vereinzelung der Hartkörper gewährleistet, wobei insbesondere auch eine gezählte Zuführung der Hartkörper in das Rohr möglich ist.

Die Hartkörper können bevorzugt Kugelform, jedoch auch andere der Dosiervorrichtung kompatibel angepasste Geometrien wie eine Zylinderform aufweisen.

Weiterhin ist vorteilhaft, dass generell eine Einführung von Hartkörpern in ein ruhendes oder strömendes Fluid möglich ist, wobei das Fluid generell ein Gas oder eine Flüssigkeit sein kann.

Ein weiterer wesentlicher Vorteil der erfindungsgemäßen Dosiervorrichtung besteht darin, dass diese eine rein mechanische Einheit bildet, die mit der Transportscheibe nur ein bewegtes Teil und so einen robusten und kostengünstigen Aufbau aufweist. Zudem ist vorteilhaft, dass allein durch eine geeignete Auslegung der mechanischen Komponenten eine Zwangsführung erreicht wird, die reproduzierbar und störungsunanfällig einen Einzeltransport der Hartkörper über die Vereinzelungseinheit zum Rohr gewährleistet.

Gemäß einer einfachen, kostengünstigen Variante ist eine manuelle Bedieneinheit für die Transportscheibe vorgesehen. Alternativ oder zusätzlich kann eine maschinelle Bedieneinheit vorgesehen sein.

Gemäß einer ersten Variante der Erfindung kann die Dosiervorrichtung als Transportvorrichtung ausgebildet sein, mittels derer die Hartkörper in dem Rohr einem Zielort zugeführt sind.

Ein erstes Ausführungsbeispiel ist die Verwendung der Dosiervorrichtung in Abfüllsystemen, bei welchen Hartkörper in Behälter oder dergleichen abgefüllt werden sollen. Ein Beispiel für derartige Hartkörper sind Kugeln von Kugellagern, die mit einem Fluid in Form eines Schmiermittels abgezählt in Behälter eingefüllt werden sollen. Mit der erfindungsgemäßen Dosiervorrichtung können die Kugeln einem Rohr in Form einer Leitung, welche das Schmiermittel führt, abgezählt zudosiert und so den Behältern zugeführt werden.

Ein weiteres Beispiel ist die Zudosierung von Hartkörpern gebildet aus Zuschlagsstoffen wie zum Beispiel Legierungsbestandteilen in ein Fluid, bei welchem es sich z.B. um geschmolzenes Metall handeln kann, während eines laufenden Produktionsprozesses. Mit der Dosiervorrichtung ist eine solche Zudosierung möglich, ohne den Produktionsprozess zu beeinträchtigen. Gemäß einer weiteren vorteilhaften Ausführungsform wird die erfindungsgemäße Dosiervorrichtung in Pipeline-Systemen eingesetzt, um dort spezifische Hartkörper in eine ein Fluid in Form eines Gases oder einer Flüssigkeit, wie zum Beispiel Erdöl, Erdgas, Kerosin, Ethylen oder Kohlenmonoxid, führende Pipeline einzuschleusen. Ein solcher Hartkörper kann einerseits von einem vorzugsweise zylindrischen Transportbehälter gebildet sein. Andererseits kann mit der Dosiervorrichtung auch eine Reinigungseinrichtung, ein sogenannter Molch, in die Pipeline eingeschleust werden. Schließlich können für den Fall, dass in der Pipeline nacheinander zwei verschiedene Fluide transportiert werden sollen, mit der Dosiervorrichtung ein oder mehrere Trennkörper in die Pipeline eingeschleust werden, welche eine Trennung zwischen den zu transportierenden Fluiden bewirken. Ein solcher Hartkörper kann auch ein zeitlich, örtlich oder in sonst einer Weise aktivierbarer Verschlusskörper sein, welcher in ein Rohrleitungssystem eingeschleust wird, um dieses an einen bestimmbaren Ort zu verschließen, z. B. im Falle eines Rohrbruches. Damit können allgemein Fehlfunktionen von anderen Absperrorganen behoben werden. Insbesondere können solche Hartkörper Notverschlüsse von Bohrlöchern bei Gas- oder Ölaustritten bilden.

Ein weiteres Ausführungsbeispiel ist der Einsatz der erfindungsgemäßen Dosiervorrichtung in einem Rohrpost-Transport-System. Mit der Dosiervorrichtung kann gezielt zu vorgegebenen Zeiten ein eine Rohrpost enthaltender Transportbehälter in eine Rohrpost-Leitung eingeschleust werden, wo als Fluid beispielsweise Druckluft verwendet wird, um den Transportbehälter zu einem Zielort zu transportieren. Im Gegensatz zu bekannten Systemen werden keine Klappensysteme zur Einführung des Transportbehälters in die Rohrpost-Leitung benötigt. Im Gegensatz zu diesen bekannten Systemen kann mit der Dosiervorrichtung die Einschleusung des Transportbehälters rückwirkungsfrei, das heißt ohne Störung des laufenden Transports in der Rohrpost-Leitung, erfolgen.

Gemäß einer weiteren vorteilhaften Ausgestaltung wird die erfindungsgemäße Dosiervorrichtung eingesetzt um Hartkörper, welche aus Reagenzien bestehen, in ein Abgassystem einzuschleusen. Beispiele für derartige Reagenzien sind solche für Denox-Katalysatoren zur Unterstützung der Stickoxid-Reduktion in einem Abgassystem.

Gemäß einer weiteren Variante der Erfindung bildet die Dosiervorrichtung ein Ausstoß-System, bei welchem Hartkörper mit einem Fluidstrahl aus dem Rohr ausgestoßen werden.

Gemäß einer ersten Ausgestaltung können mit der Dosiervorrichtung Hartkörper wie Stahlkugeln einem in einem Rohr geführten Fluidstrahl, insbesondere einem in einem Wasserrohr geführten Wasserstrahl, zudosiert werden. Die Hartkörper werden in dem aus dem Rohr geführten Fluidstrahl auf eine zu bearbeitende oder zu reinigende Oberfläche eines Gegenstands geführt. Beispielsweise können auf diese Weise Oberflächen von Schiffsrümpfen gereinigt werden.

Weiterhin können derartige Hartkörper in Form von Stahlkugeln oder dergleichen einem Wasserstrahl zudosiert werden, um eine Abwehrwaffe zu generieren. Beispielsweise kann ein solches System als Piratenabwehrsystem auf einem Schiff eingesetzt werden. Gegenüber einem reinen Wasserstrahl kann durch die Zudosierung der Hartkörper zum Wasserstrahl die Distanzwirkung erheblich verbessert werden, das heißt angreifende Piraten können so auf grö-βerer Distanz gehalten werden als durch den Wasserstrahl alleine. Vorteilhaft hierbei ist, dass die Hartkörper in Form von Stahlkugeln rein passive Gegenstände sind, das heißt keine Munition darstellen und auch keine explosiven Stoffe sind. Damit fällt ein derartiges System z.B. nicht unter das Kriegswaffenrecht. Weiterhin ist vorteilhaft, dass die Hartkörper nicht verderblich sind und beliebig lange gelagert werden können. Schließlich kann die Dosiervorrichtung auch von ungeübten Personen einfach bedient werden. Für den Fall, dass das Schiff doch in die Hände der Piraten fallen sollte, lässt sich diese Art der Abwehrwaffe nicht einfach gegen die Schiffsbesatzung wenden, da sie ortsfest montiert ist und nur begrenzte mechanische Wirkung hat. Gemäß einer weiteren Ausführungsform kann die Dosiervorrichtung als Ausstoß-System eingesetzt werden, mit welchem definierte Hartkörper in Form von Behältern mit Explosivstoffen und Zündmechanismen wie kleinen Minen, Ortungssystemen wie Sonarbojen oder Kommunikationssystemen wie Funkbojen in den Kühlwasserauslass eines Schiffes, insbesondere U-Boots, ausgeschleust werden. Die so erfolgende Ausschleusung der Hartkörper kann akustisch nicht geortet werden, da durch die rückwirkungsfreie Zuführung z.B. zum ablaufenden Kühlwasserstrom kein akustisch hervortretendes Ereignis auftritt. Schließlich kann die erfindungsgemäße Dosiervorrichtung auch als Schusswaffe verwendet werden, indem als Hartkörper Projektile in ein Rohr als Abschussrohr eingespeist werden. Um ein Projektil abzufeuern wird über eine andere Vorrichtung, gleichzeitig mit der Einführung des Projektils oder in einem separaten Schritt, auch eine geeignete Treibladung zugeführt.

Wesentlich hierbei ist, dass mit der Dosiervorrichtung auch eine Verschlussfunktion gegenüber dem die Projektile lagernden Magazin ausgeübt wird. Damit wird ohne weitere Hilfsmittel und ohne z.B. oszillierende Bewegungen, welche durch träge Massen erheblich Kräfte erfordern, um diese beschleunigt auszuführen, ein sicherer Verschluss gegenüber dem Magazin erzielt, wodurch eine hohe Betriebssicherheit erzielt wird. Weiterhin wird dadurch auch eine hohe Kadenz, das heißt Schussfolge ermöglicht, insbesondere auch deshalb, weil die Dosiervorrichtung, welche zugleich der Verschluss ist, nur ein bewegtes Teil aufweist.

Durch diese Ausbildung der Dosiervorrichtung wird zudem der Einsatz innovativer Treibladungen, die insbesondere als gasförmige, flüssige oder mehrkomponentige Treibladungen ausgebildet sein können, ermöglicht. Die gasförmigen oder flüssigen Treibladungen können in eine Treibladungskammer eingespritzt werden, worauf das Projektil in das Rohr eingeführt werden kann und dann die Zündung der Treibladung erfolgen kann.

Bei der Verwendung mehrkomponentiger Treibladungen sind die einzelnen Komponenten beispielsweise nicht explosiv und können somit gefahrlos gelagert werden. Die Komponenten der Treibladung werden erst bei Einspritzen in die Treibladungskammer gemischt, was vorzugsweise zur selbsttätigen Zündung führt.

Da die Waffe bis zum Moment der Schussauslösung ungeladen bleibt und erst mit der Mischung der Treibladung die Schussauslösung erfolgt, weist die Waffe eine hohe Sicherheit auf. Wesentliche Sicherheitsaspekte sind dabei, dass die Komponenten der Treibladung für sich allein ungefährlich sind und so gefahrlos gelagert werden können. Weiterhin werden bei der erfindungsgemäßen Schussauslösung Fehlauslösungen von Schüssen vermieden. Auch tritt kein Problem auf, wenn die Treibladung gezündet werden sollte und das Projektil noch nicht oder nicht vollständig dem Rohr zudosiert sein sollte, da das Projektil auch noch während der ablaufenden Verbrennung der Treibladung zudosiert werden kann. Dies kann insbesondere für den Fall vorteilhaft ausgenutzt werden, dass Treibladungen eingesetzt werden, die bei geringem Druck nur langsam abbrennen, jedoch bei einer Drucksteigerung mit progressiver Verbrennungsgeschwindigkeit reagieren. In diesem Fall ist die Treibladung in drucklosem Zustand relativ ungefährlich, wodurch eine kontinuierliche Zuführung von Treibladungen in eine Treibladungskammer ermöglicht ist. Das dann mit der Dosiervorrichtung zudosierte Projektil führt durch den Abschluss des Rohrs, das heißt des Laufs zu der notwendigen Drucksteigerung, wodurch die Reaktionsgeschwindigkeit der Treibladung schnell ansteigt und eine Druckspitze generiert wird, die das Projektil aus dem Lauf treibt. Die Dosiervorrichtung stellt im Störungsfall zugleich sicher, dass nicht versehentlich zwei Projektile in das Rohr eingeführt werden, da ein bereits eingeführtes Projektil die Position besetzt, in welche ein zweites eingeführt werden könnte, wodurch aber auch die Bewegung der Transportscheibe gehemmt und das zweite Projektil nicht weitertransportiert wird. Dieses erste Projektil muss daher mittels der Treibladung zunächst ausgestoßen werden, bevor die Transportscheibe erneut ihre Drehbewegung wieder aufnehmen kann.

Die Erfindung wird im Folgenden anhand der Zeichnungen erläutert. Es zeigen:
- Figur 1:: Schematische Darstellung des vorderen Endes eines Wasserrohrs mit einer zugeordneten Dosiervorrichtung zum Eintrag von Hartkörpern in das Wasserrohr bei aus dem Wasserrohr austretenden Wasserstrahl.
- Figur 2:: Anordnung gemäß Figur 1 bei Austritt eines Hartkörpers aus dem Wasserrohr
- Figur 3:: Draufsicht auf eine Transportscheibe der Vorrichtung gemäß der Figuren 1 und 2.
- Figur 4:: Draufsicht auf ein Gehäuse der Vorrichtung gemäß den Figuren 1 und 2 mit einem in das Wasserrohr einmündenden Zuführkanal.
- Figur 4a:: Auf dem Gehäuse gelagerte Transportscheibe in einer ersten Drehstellung.
- Figur 4b:: Auf dem Gehäuse gelagerte Transportscheibe in einer zweiten Drehstellung.
- Figur 5:: Schnittdarstellung der Transportscheibe gemäß Figur 3.
- Figur 6:: Schnittdarstellung des Gehäuses gemäß Figur 4.
- Figur 7:: Weitere Ausführungsform einer Dosiervorrichtung an einer Pipeline.

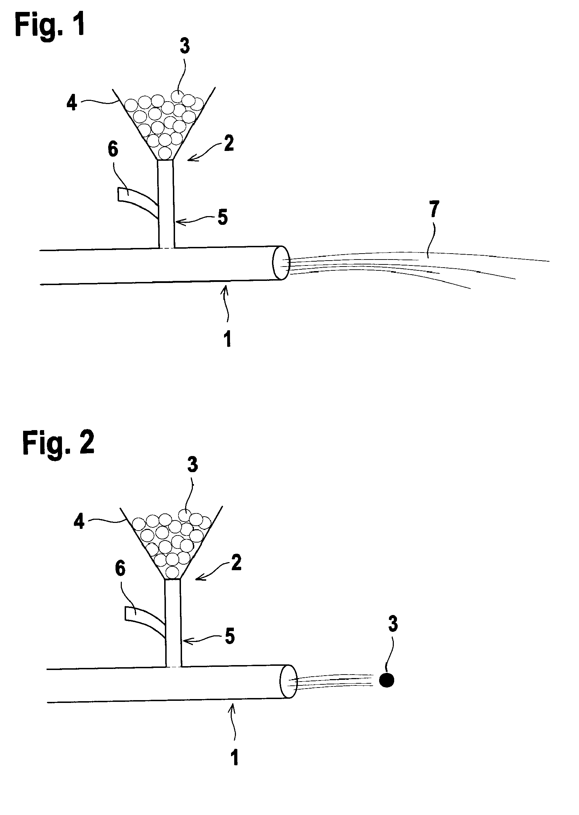

Die Figuren 1 und 2 zeigen das vordere Ende eines als Wasserrohr 1 ausgebildeten Rohrs, welchem eine Dosiervorrichtung 2 zugeordnet ist, mittels derer einzeln dem Wasserrohr 1 kugelförmige Hartkörper 3 zugeführt werden können.

Die Dosiervorrichtung 2 weist ein Reservoir in Form eines Vorratsbehälters 4 auf, in dem ein Vorrat von Hartkörpern 3 gelagert ist. Mittels einer Vereinzelungseinheit 5 können einzeln Hartkörper 3 aus dem Vorratsbehälter 4 ausgeführt und in das Wasserrohr 1 eingeführt werden. Die Vereinzelungseinheit 5 wird von einer Bedienperson mit einer Bedieneinheit 6 betätigt. Bei jeder Betätigung wird ein Hartkörper 3 dem Wasserrohr 1 zugeführt.

Figur 1 zeigt die Situation, bei welcher über das Wasserrohr 1 allein ein Wasserstrahl 7 ausgeleitet wird.

Figur 2 zeigt den Fall, dass ein mit der Dosiervorrichtung 2 zudosierter Hartkörper 3 mit dem Wasserstrahl 7 aus dem Wasserrohr 1 ausgeleitet wird.

Die so ausgebildete Vorrichtung kann insbesondere zur Oberflächenbearbeitung von Gegenständen eingesetzt werden. Beispielsweise können mit den Hartkörpern 3, die mit dem Wasserstrahl 7 aus dem Wasserrohr 1 ausgeleitet werden, Oberflächen eines Schiffsrumpfs von Farbschichten, Korrosionsfolgeprodukten und dergleichen gereinigt werden. Hierzu wird mit der Dosiervorrichtung 2 vorzugsweise in rascher Folge eine Vielzahl von Hartkörpern 3 dem Wasserstrahl 7 zudosiert.

Der Eintrag eines Hartkörpers 3 in das Wasserrohr 1 erfolgt vorteilhaft so, dass der Wasserstrahl 7 nur kurzzeitig unterbrochen wird. Das vordere Ende des Wasserrohrs 1 bildet eine Beschleunigungsstrecke, in der der Hartkörper 3 durch den nachfolgenden Wasserstrahl 7 auf die Geschwindigkeit des Wasserstrahls 7 beschleunigt wird und dann in der gleichen Richtung wie der Wasserstrahl 7 aus dem Wasserrohr 1 austritt (Figur 2) und mit diesem auf die zu bearbeitende Oberfläche geführt ist. Die Bahn des Hartkörpers 3 ist somit durch den Wasserstrahl 7 vorgegeben und kann so von der Bedienperson einfach kontrolliert werden.

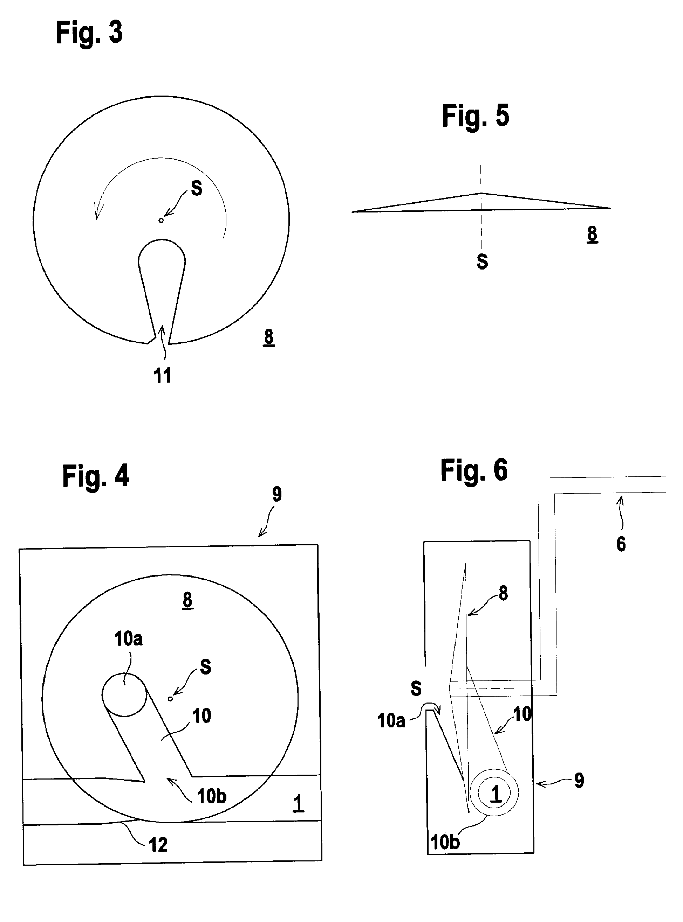

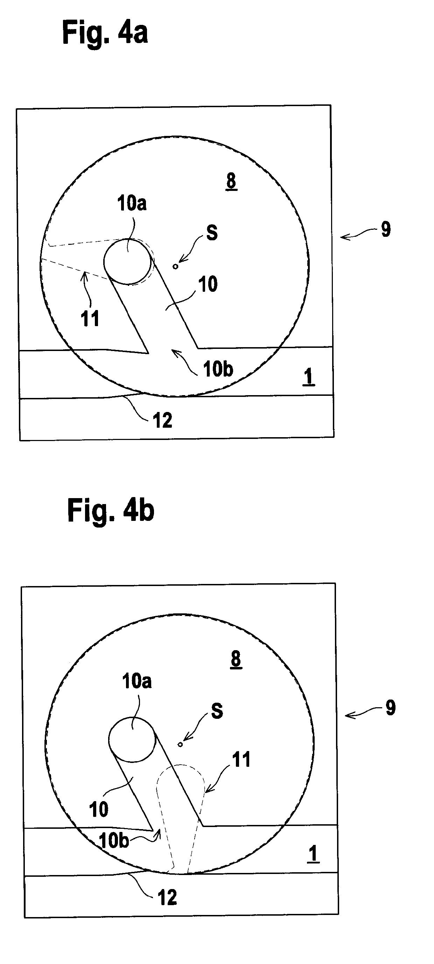

Die Figuren 3 bis 6 zeigen die Komponenten der Vereinzelungseinheit 5. Dabei zeigen die Figuren 3 und 5 eine Transportscheibe 8. Diese Transportscheibe 8 ist drehbar an einem Gehäuse 9 gelagert, das die Figuren 4 und 6 in einer Einzeldarstellung zeigen. Schließlich zeigen die Figuren 4a und 4b die auf dem Gehäuse 9 aufsitzende Transportscheibe 8 in zwei unterschiedlichen Drehstellungen.

Die einen kreisförmigen Querschnitt aufweisende Transportscheibe 8 ist bezüglich ihrer Symmetrieachse S auf dem Gehäuse 9 drehbar gelagert und dient dazu, Hartkörper 3 einzeln aus dem Vorratsbehälter 4 zu entnehmen um sie dann über einen Zuführkanal 10 im Gehäuse 9 dem Wasserrohr 1 zuzuführen.

Hierzu ist zum einen die Kontur an die zu transportierenden Hartkörper 3 angepasst. Im vorliegenden Fall weist die Transportscheibe 8, wie aus Figur 5 ersichtlich, die Form eines flachen Kegels auf. Generell sind auch andere Formen der Transportscheibe 8 wie plan-konvexe, sphärische, asphärische Formen und dergleichen möglich.

Weiterhin weist die Transportscheibe 8 einen Transportschlitz 11 auf, der in radialer Richtung der Transportscheibe 8 verläuft und am Rand der Transportscheibe 8 ausmündet. Insbesondere bei dickeren Transportscheiben 8 kann anstelle des Transportschlitzes 11 auch ein dreidimensionaler Kanal, das heißt eine Transportausnehmung, vorgesehen sein, die gegebenenfalls mit veränderlicher Tiefe aus dem Grundmaterial der Transportscheibe 8 herausgearbeitet ist. Dieser Kanal kann mit einer geeigneten Gegenkontur im Gehäuse 9 einen den Hartkörper 3 allseitig umschließenden Kanal bilden, in welcher der Hartkörper 3 geführt und in einer Richtung gedrängt wird, sobald die Transportscheibe 8 in Drehung versetzt wird. Der Ursprung des Transportschlitzes 11 ist seitlich versetzt zur Symmetrieachse, so dass die Länge des Transportschlitzes 11 kleiner ist als der Radius der Transportscheibe 8. Im Bereich des Ursprungs ist die Breite des Transportschlitzes 11 geringfügig größer als der Durchmesser eines Hartkörpers 3, so dass dort ein Hartkörper 3 durch den Transportschlitz 11 durchtreten kann. Der Transportschlitz 11 verjüngt sich dann zur Ausmündung hin kontinuierlich. Der Transportschlitz 11 ist generell an die zu fördernden Hartkörper 3 angepasst. Dabei kann der Transportschlitz 11 anstelle in radialer Richtung auch spiralförmig oder dergleichen verlaufen. Der Transportschlitz 11 wird, sofern die Transportscheibe 8 von der Materialstärke geeignet gewählt wird, zu einer flacher und schmaler werdenden Vertiefung in der Transportscheibe 8, welche nur an der Stelle, an welcher der zugeführte Hartkörper 3 aufgenommen werden soll, die Transportscheibe 8 durchbricht. Auch der Radius der Transportscheibe 8 ist an die Hartkörper 3 angepasst. Vorzugsweise beträgt der Radius der Transportscheibe 8 das Sechs- bis Achtfache des Radius eines Hartkörpers 3.

Wie aus den Figuren 4, 4a, 4b und 6 ersichtlich, mündet der im Gehäuse 9 geführte Zuführkanal 10 an seinem oberen längsseitigen Ende mit einer ersten Bohrung 10a aus, auf welcher die Transportscheibe 8 aufsitzt. Diese erste Bohrung 10a bildet eine Ausmündung zum Vorratsbehälter 4, so dass, wenn der Transportschlitz 11 vor der ersten Bohrung 10a in geeigneter Weise (wie in Figur 4a dargestellt) liegt, ein Hartkörper 3 aus dem Vorratsbehälter 4 in den Zuführkanal 10 geführt ist. Der Zuführkanal 10 mündet an einem unteren längsseitigen Ende mit einer zweiten Bohrung 10b, in das Wasserrohr 1 ein, so dass ein Zuführkanal 10 geführter Hartkörper 3 in das Wasserrohr 1 transportierbar ist.

Die erste Bohrung 10a des Zuführkanals 10 liegt seitlich versetzt zur Symmetrieachse S der Transportscheibe 8 und auch seitlich versetzt zur zweiten Bohrung 10b. Damit verläuft der sich längs einer Geraden erstreckende Zuführkanal 10 sowohl geneigt zur Symmetrieachse S als auch geneigt zur Längsachse des Zuführkanals 10, welcher vollständig gebildet wird aus dem Transportschlitz 11 in der Transportscheibe 8 sowie dem in dem feststehenden Gehäuseteil befindlichen Teil. Der Durchmesser des Zuführkanals 10 ist geringfügig größer als der Durchmesser eines Hartkörpers 3.

Innerhalb des Wasserrohrs 1 befindet sich eine Düse 12, die eine lokale Verengung des Querschnitts des Wasserrohrs 1 bildet. Die Düse 12 ist in Strahlrichtung des Wasserstrahls 7 vor der Einmündung des Zuführkanals 10 in das Wasserrohr 1 angeordnet. Unmittelbar in Strahlrichtung der Düse 12 können dieser nicht dargestellte Entlastungsöffnungen nachgeordnet sein, die mit Ventilen oder dergleichen geöffnet oder geschlossen werden können. Der Durchmesser der Düse 12 ist kleiner als der Durchmesser eines Hartkörpers 3. Dagegen ist der Durchmesser des Wasserrohrs 1 im Bereich von der Einmündung des Zuführkanals 10 bis zum Austritt der Wasserrohrs 1, an dem ein nicht gesondert dargestelltes Mundstück angeordnet sein kann, etwas größer als der Durchmesser eines Hartkörpers 3. Auch der Durchmesser der Entlastungsöffnungen ist kleiner als der Durchmesser der Hartkörper 3.

Wie aus Figur 6 ersichtlich, ist im vorliegenden Fall eine mechanische Bedieneinheit 6 in Form einer Handkurbel vorgesehen. Zur Einzelförderung von Hartkörpern 3 aus dem Vorratsbehälter 4 in den Zuführkanal 10 wird die Handkurbel entgegen dem Uhrzeigersinn gedreht. Im vorliegenden Fall ist die Transportscheibe 8 mit ihrem Transportschlitz 11 so ausgebildet, dass pro Umdrehung der Handkurbel ein Hartkörper 3 dem Zuführkanal 10 zugeführt wird. Prinzipiell sind Konstruktionen derart möglich, dass pro Umdrehung der Handkurbel mehrere Hartkörper 3 gefördert werden.

Vorzugsweise weist die Handkurbel eine Verriegelung auf, die aktiv gelöst werden muss um sie betätigen zu können. Damit werden zufällige Betätigungen der Handkurbel ausgeschlossen.

Prinzipiell kann alternativ oder zusätzlich eine maschinelle Bedieneinheit mit einem elektrischen, pneumatischen oder hydraulischen Antrieb vorgesehen sein.

Die Funktion der Vereinzelungseinheit 5 gemäß den Figuren 3 bis 6 ist derart, dass in der in Figur 4a dargestellten ersten Drehstellung der Transportscheibe 8 der Transportschlitz 11 die erste Bohrung 10a des Zuführkanals 10 frei gibt, so dass aus der Vereinzelungseinheit 5 ein Hartkörper 3 in den Zuführkanal 10 eingeführt wird. Die Einführung des Hartkörpers 3 in den Zuführkanal 10 erfolgt zwangsgeführt durch die Schwerkraft. Generell kann anstelle oder zusätzlich zur Schwerkraft eine Zwangskraft, die durch einen Magneten, einen Hilfswasserstrahl, Druckkraft oder ein Transportzahnrad ausgeübt wird, den Hartkörper 3 in den Zuführkanal 10 drücken. Bei geeigneter Ausgestaltung der Dosiervorrichtung 2 und des Wasserrohrs 1 kann der Hartkörper 3 auch angesaugt werden (Venturi-Düse-Prinzip). Der in den Zuführkanal 10 eingeführte Hartkörper 3 belegt den vorhandenen Platz und verhindert das Eindringen eines weiteren Hartkörpers 3. Der in den Zuführkanal 10 eingeführte Hartkörper 3 würde ohne Weiterdrehen der Transportscheibe 8 an dieser Position verharren. Da jedoch die Transportscheibe 8 sofort weiter gedreht wird, wird der Hartkörper 3 weiter in den Zuführkanal 10 eingeführt. Da der Durchmesser des Zuführkanals 10 geringfügig größer ist als der Durchmesser der Hartkörper 3, ist der jeweilige Hartkörper 3 mit geringem Spiel in dem Zuführkanal 10 geführt. Durch Weiterdrehen der Transportscheibe 8 wird der Hartkörper 3 weiter nach unten im Zuführkanal 10 gedrückt, bis die in Figur 4b dargestellte zweite Drehstellung der Transportscheibe 8 erreicht ist. Dann ist der Transportschlitz 11 so orientiert, dass der Hartkörper 3 in Richtung des Wasserrohrs 1 freigegeben wird. Da daraufhin die Transportscheibe 8 weiter gedreht wird und dadurch der Zuführkanal 10 verschlossen wird, wird durch die Transportscheibe 8 der Hartkörper 3 in das Wasserrohr 1 gedrückt. Durch die Verschlusswirkung der Transportscheibe 8 wird eine Einfuhr von Wasser in den Zuführkanal 10 vermieden. Danach werden die Entlastungsöffnungen wahlweise wieder geschlossen oder bleiben geöffnet. Der nachdrängende Wasserstrahl 7 beschleunigt den Hartkörper 3 im Wasserrohr 1 bis zur Ausmündung, das heißt dieser Teil des Wasserrohrs 1 bildet eine Beschleunigungsstrecke, so dass der Hartkörper 3 dann mit der Geschwindigkeit der Wasserstrahlen 7 auf das Zielobjekt geführt wird.

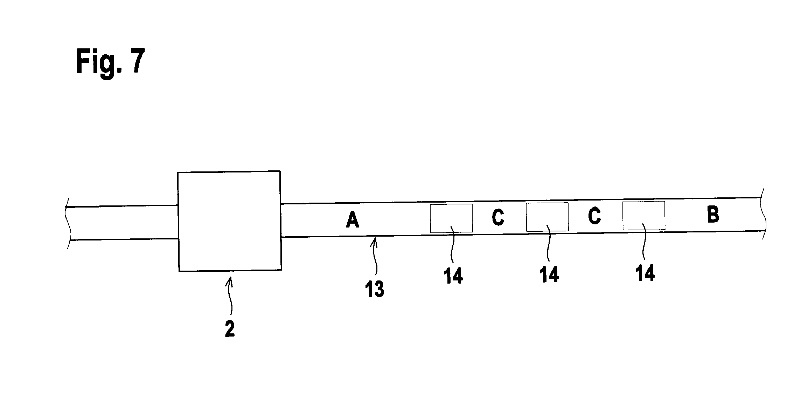

Figur 7 zeigt ein weiteres Ausführungsbeispiel, bei der eine Dosiervorrichtung 2 dazu verwendet wird, Hartkörper 3 einem von einer Pipeline 13 gebildeten Rohr vereinzelt und zu bestimmten Zeitpunkten zuzuführen. Die Pipeline 13 kann gasförmige oder flüssige Medien, das heißt Fluide, führen, insbesondere Erdöl, Erdgas, Kohlenmonoxid, Kerosin, Ethylen und dergleichen. Die Dosiervorrichtung 2 gemäß Figur 7 entspricht dabei im wesentlichen der Dosiervorrichtung 2 gemäß Figur 1. Lediglich die Dimensionierung der Dosiervorrichtung 2 ist an die Pipeline 13 angepasst. Zudem sind die Bedieneinheit 6 und der Vorratsbehälter 4 an die Geometrien der Hartkörper 3 angepasst, die im vorliegenden Fall bevorzugt zylindrische Formen aufweisen.

Die Düse 12, wie in Figur 4 dargestellt, ist in solchen Systemen in der Regel nicht vorhanden.

Generell können mit der Dosiervorrichtung 2 als Hartkörper 3 einzelne Transportbehälter oder auch Reinigungssysteme, sogenannte Molche, in die Pipeline 13 eingeführt werden.

Im vorliegenden Fall werden in die Pipeline 13 zylindrische Trennkörper 14 eingeführt. Diese Trennkörper 14 dienen dazu, zwei Medien, die nacheinander und getrennt voneinander in der Pipeline 13 transportiert werden sollen, voneinander zu trennen, das heißt gegen eine Durchmischung zu schützen.

Im vorliegenden Fall werden zu definierten Zeiten in Abstand nacheinander drei Trennkörper 14 mittels der Dosiervorrichtung 2 eingeschleust, um ein Medium A von einem Medium B zu trennen. Die mit C bezeichneten Zonen bilden Bereiche geringer Durchmischung der Medien A und B, da mit einem einzelnen Trennkörper 14 in der Regel keine vollständige Abtrennung der Medien möglich ist, da der Trennkörper 14 generell mit geringem Spiel in der Pipeline 13 geführt sein muss und auch elastische Dichtungen keine vollständige Trennung der jeweiligen abzugrenzenden Räume sicherstellen können.

### Bezugszeichenliste

- (1): Wasserrohr
- (2): Dosiervorrichtung
- (3): Hartkörper
- (4): Vorratsbehälter
- (5): Vereinzelungseinheit
- (6): Bedieneinheit
- (7): Wasserstrahl
- (8): Transportscheibe
- (9): Gehäuse
- (10): Zuführkanal
- (10a): erste Bohrung
- (10b): zweite Bohrung
- (11): Transportschlitz
- (12): Düse
- (13): Pipeline
- (14): Trennkörper

## Patentansprüche

1. Dosiervorrichtung (2) mit einer Vereinzelungseinheit (5), mittels derer einzelne Hartkörper (3) einem ein Fluid führendes Rohr zuführbar sind, wobei die Vereinzelungseinheit (5) eine Transportscheibe (8) aufweist, durch deren Betätigung zu definierten Zeitpunkten eine Einzelzuführung von Hartkörpern (3) in das Rohr erfolgt, und wobei ein in das Rohr eingeführter Hartkörper (3) mittels des Fluids in dem Rohr transportiert wird.

2. Dosiervorrichtung nach Anspruch 1, **dadurch gekennzeichnet, dass** die Transportscheibe (8) einen Transportschlitz (11) aufweist und an einem Gehäuse (9) drehbar gelagert ist, in welchem ein Zuführkanal (10) verläuft, der an einem längsseitigen Ende mit einer ersten Bohrung (10a) in einem Reservoir zur Lagerung von Hartkörpern (3) ausmündet, und der am zweiten längsseitigen Ende mit einer zweiten Bohrung (10b) in das Rohr einmündet, wobei in einer ersten Drehstellung der Transportscheibe (8) nur ein Hartkörper (3) aus dem Reservoir über den Transportschlitz (11) in den Zuführkanal (10) eingeführt ist, und in einer zweiten Drehstellung der Transportscheibe (8) der Hartkörper (3) über den Transportschlitz (11) aus dem Zuführkanal (10) in das Rohr eingeführt ist.

3. Dosiervorrichtung nach Anspruch 2, **dadurch gekennzeichnet, dass** die Transportscheibe (8) seitlich versetzt zum Zuführkanal (10) an diesen angrenzend angeordnet ist, und dass die Längsachse des Zuführkanals (10) geneigt zur Längsachse des Rohrs und geneigt zur senkrecht zur Längsachse des Rohrs verlaufenden Drehachse verläuft, wobei die zweite Bohrung (10b) des Zuführkanals (10) seitlich versetzt zur Drehachse der Transportscheibe (8) liegt.

4. Dosiervorrichtung nach einem der Ansprüche 2 oder 3, **dadurch gekennzeichnet, dass** der Transportschlitz (11) in radialer Richtung der Transportscheibe (8) verläuft und an deren Rand ausmündet, wobei sich der Transportschlitz (11) von einem seitlich versetzt zur Drehachse der Transportscheibe (8) liegenden Ursprung zur Ausmündung hin verjüngt und die Breite des Transportschlitzes (11) im Bereich des Ursprungs geringfügig größer ist als die Breite eines Hartkörpers (3).

5. Dosiervorrichtung nach einem der Ansprüche 2 bis 4, **dadurch gekennzeichnet, dass** anstelle eines Transportschlitzes (11) eine Transportausnehmung vorgesehen ist.

6. Dosiervorrichtung nach Anspruch 5, **dadurch gekennzeichnet, dass** die Transportausnehmung mit einer Ausnehmung im Gehäuse (9) einen Kanal ausbildet, der an die Geometrie der Hartkörper (3) angepasst ist.

7. Dosiervorrichtung nach einem der Ansprüche 2 bis 6, **dadurch gekennzeichnet, dass** in der ersten Drehstellung ein Hartkörper (3) durch Schwerkraft und/oder eine Zwangskraft in den Zuführkanal (10) gedrückt wird, dass zwischen der ersten und zweiten Drehstellung der Zuführkanal (10) mit der Transportscheibe (8) verschlossen ist, und dass bei der Bewegung der Transportscheibe (8) aus der zweiten Drehstellung heraus der Hartkörper (3) in das Rohr gedrückt ist.

8. Dosiervorrichtung nach einem der Ansprüche 1 bis 7, **dadurch gekennzeichnet, dass** die Transportscheibe (8) mittels einer manuellen Bedieneinheit (6) und/oder mittels einer maschinellen Bedieneinheit (6) betätigbar ist.

9. Dosiervorrichtung nach einem der Ansprüche 1 bis 8, **dadurch gekennzeichnet, dass** diese eine Transportvorrichtung ausbildet, mittels derer die Hartkörper (3) in dem Rohr einem Zielort zugeführt sind.

10. Dosiervorrichtung nach Anspruch 9, **dadurch gekennzeichnet, dass** die Hartkörper (3) Behältern zugeführt sind, oder dass die Hartkörper (3) Zuschlagsstoffe bilden, oder dass die Hartkörper (3) Brennstoffe enthalten, die einem Reaktor zugeführt werden.

11. Dosiervorrichtung nach Anspruch 9, **dadurch gekennzeichnet, dass** als Hartkörper (3) Transportbehälter in ein als Leitung ausgebildetes Rohr eines Rohrpost-Transport-Systems eingespeist werden.

12. Dosiervorrichtung nach Anspruch 9, **dadurch gekennzeichnet, dass** die Hartkörper (3) als Transportbehälter, Reinigungseinrichtungen, aktivierbare Verschlusskörper oder Trennkörper (14) ausgebildet sind, die in ein als Pipeline (13) ausgebildetes Rohr eingeschleust werden.

13. Dosiervorrichtung nach Anspruch 9, **dadurch gekennzeichnet, dass** die Hartkörper (3) Reagenzien enthalten, und dass diese Hartkörper (3) in ein Rohr eines Abgassystems eingespeist werden.

14. Dosiervorrichtung nach einem der Ansprüche 1 bis 8, **dadurch gekennzeichnet, dass** diese ein Ausstoß-System bildet, bei welchem Hartkörper (3) mit einem Fluidstrahl aus dem Rohr ausgestoßen werden.

15. Dosiervorrichtung nach Anspruch 14, **dadurch gekennzeichnet, dass** nicht explosive Hartkörper (3) mit einem Flüssigkeitsstrahl aus dem Rohr ausgestoßen werden und gegen ein Zielobjekt geführt sind.

16. Dosiervorrichtung nach Anspruch 15, **dadurch gekennzeichnet, dass** als Hartkörper (3) Explosivstoffe samt Zündvorrichtung enthaltende Behälter, Ortungssysteme, Sonarsysteme oder Kommunikationssysteme in einem Kühlwasserauslass eines Schiffes ausgeführt werden.

17. Dosiervorrichtung nach Anspruch 16, **dadurch gekennzeichnet, dass** als Hartkörper (3) Projektile dem Rohr zugeführt werden, und dass separat hiervon dem Rohr Treibladungen oder einzelne Komponenten von Treibladungen zugeführt werden, mittels derer anschließend ein zugeführter Hartkörper (3) aus dem Rohr getrieben wird.
